# EUROPEAN PATENT SPECIFICATION

(11) **EP 4 432 729 B1**
(45) Date of publication and mention of the grant of the patent: **04.11.2026**
(21) Application number: 22905960.5
(22) Date of filing: 07.09.2022
(51) Int. Cl.: H04W 36/14, H04W 76/18

(54) **CALL RECEIVING METHOD AND COMMUNICATION APPARATUS**
ANRUFEMPFANGSVERFAHREN UND KOMMUNIKATIONSVORRICHTUNG
PROCÉDÉ DE RÉCEPTION D'APPEL ET APPAREIL DE COMMUNICATION

(30) Priority: 15.12.2021 CN 202111534732; 21.02.2022 CN 202210159154
(43) Date of publication of application: 18.09.2024
(60) Divisional application: 26198385.2
(73) Proprietor: Honor Device Co., Ltd., Shenzhen, Guangdong 518040 (CN)
(72) Inventor: LI, Haibo, Shenzhen, Guangdong 518040 (CN)
(74) Representative: Isarpatent
(86) International application number: PCT/CN2022/117661
(87) International publication number: WO 2023/109205

(56) References cited:
- EP-B1- 4 228 322
- CN-A- 111 372 327
- CN-A- 113 438 679
- CN-A- 113 438 679
- CN-A- 114 698 046
- US-A1- 2019 281 506
- US-A1- 2021 037 430
- WI RAPPORTEUR (ERICSSON): "RAN1 agreements for Rel-16 Additional MTC Enhancements for LTE", 3GPP DRAFT; R1-1811736 RAN1 AGREEMENTS FOR REL-16 ADDITIONAL MTC ENHANCEMENTS FOR LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chengdu, China; 20181008 - 20181012, 16 October 2018 (2018-10-16), Mobile Competence Centre ; 650, route des Lucioles ; F-06921 Sophia-Antipolis Cedex ; France , XP051519125

## Description

Priority is claimed to Chinese Patent Application No. 202111534732.5, filed with the China National Intellectual Property Administration on December 15, 2021 and entitled "METHOD FOR IMPROVING SUCCESS RATE OF BEING CALLED OF SA TERMINAL", and Chinese Patent Application No. 202210159154.X, filed with the China National Intellectual Property Administration on February 21, 2022 and entitled "CALL RECEIVING METHOD AND COMMUNICATION APPARATUS".

### TECHNICAL FIELD

This disclosure generally relates to the field of wireless communication, and the invention in particular relates to a call receiving method, a communication apparatus, and a chip system.

### BACKGROUND

In a process in which mobile communication operators gradually build the fifth generation (5th generation, 5G) stand alone (stand alone, SA), there is still a problem of imperfect SA function of a 5G network. In this case, when a terminal device in an SA mode is called, there is often a problem that the terminal device cannot connect the call due to a 5G network failure. Another example can be found in patent documents US2021/037430A1 and CN113438679A.

### SUMMARY

The object of the present invention is to provide a call receiving method, a communication apparatus, and a chip system, to improve a success rate of being called of a terminal device in an SA mode. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, in particular the following technical solutions are used in embodiments of this application.

According to a first aspect according to the invention, the invention provides the following call receiving method. According to the invention, this method includes: A terminal device in a stand alone mode receives a call message from a network in a new radio (new radio, NR) domain, where the call message is for requesting to call the terminal device; and the terminal device falls back, if the terminal device does not receive expected information from the network within a first time period after a preset call procedure, to a long term evolution (long term evolution, LTE) domain after the first time period to receive a call.

According to the call receiving method provide in this embodiment of this application, when the terminal device in the SA mode receives the call message from the network in the NR domain, if a 5G network fails, the terminal device cannot receive the expected information from the network within the first time period after the preset call procedure, so that the terminal device falls back to the LTE domain after the first time period to receive the call. Because the terminal device generally waits for an indication from the network side whether to fall back to the LTE domain, when the 5G network fails, the 5G network cannot indicate the terminal device to fall back to the LTE domain. Therefore, according to the call receiving method provided in this embodiment of this application, a success rate of being called of the terminal device in the SA mode can be improved by actively falling back to the LTE domain to attempt to receive the call in the LTE domain.

In a possible but not claimed implementation, the preset call procedure is a radio resource control (radio resource control, RRC) reconfiguration procedure between the terminal device and a fifth generation 5G access network device, and the RRC reconfiguration procedure is triggered by a service request procedure between the terminal device and a 5G core network, and the expected information includes an invitation (INVITE) message. In other words, after the terminal device and the 5G core network complete the RRC reconfiguration procedure triggered by the service request procedure, the terminal device is expected to receive the invitation (INVITE) message from the 5G core network. Due to network failures and other reasons, the terminal device cannot receive the invitation (INVITE) message, and then the terminal device actively falls back to the LTE domain to receive the call after the first time period.

In a possible but not claimed implementation, the preset call procedure is for the terminal device to send a 183 session progress message to a service centralization and continuity application server (service centralization and continuity application server, SCC AS) through a 5G access network device and a 5G core network, the expected information is bearer indication information or fallback indication information. According to the invention, the bearer indication information indicates the terminal device to establish or modify a dedicated bearer for voice in the NR domain, and the fallback indication information indicates the terminal device to fall back to the LTE domain, wherein the first time period refers to a time period from when the first timer starts to when the first timer expires. In other words, after the terminal device sends the 183 session progress message to the service centralization and continuity application server through the 5G access network device and the 5G core network, the terminal device is expected to receive the bearer indication information or the fallback indication information from the 5G core network. If the terminal device cannot receive the bearer indication information or the fallback indication information due to reasons such as difficulty in uplink transmission caused by network failures or sudden interference, the terminal device actively falls back to the LTE domain after the first time period to receive the call.

According to the invention, the method further includes: The terminal device returns, if the terminal device does not receive a call in the LTE domain after the terminal device falls back to the LTE domain and before the second timer expires, to the NR domain.

In a possible implementation, that the terminal device returns to the NR domain after the second time period includes: The terminal device receives the redialed call in the LTE domain within a third time period after the second time period; and the terminal device returns to the NR domain after the third time period. The terminal device delays in the LTE domain for a period of time and then returns to the NR domain, to receive the redialed call from the opposite end in the LTE domain.

In a possible implementation, a length of the third time period is determined by a quantity of times the terminal device does not receive the expected information. The greater the quantity of times, the longer the length of the third time period, and the smaller the quantity of times, the shorter the length of the third time period. A greater quantity of times the terminal device does not receive the expected information indicates a greater impact of the NR domain network failure, and thus indicates a longer time for staying in the LTE domain to receive the call.

In a possible implementation, that the terminal device returns, if the terminal device does not receive the call in the LTE domain within a second time period after the terminal device falls back to the LTE domain, to the NR domain after the second time period includes: The terminal device returns to the NR domain after the second time period if the terminal device does not receive, in the LTE domain, indication information indicating the terminal device to establish a dedicated bearer for voice in the LTE domain and does not receive the call after sending a 183 session progress message within the second time period after the terminal device falls back to the LTE domain. In other words, when the terminal device cannot establish a dedicated bearer in the LTE domain and receive the call, the terminal device returns to the NR domain after the second time period to receive the call in the NR domain.

According to the invention, the method further includes: The terminal device counts a success rate of falling back to the LTE domain, where the success rate is a ratio of a quantity of times the terminal device successfully falls back to the LTE domain to a total quantity of times the terminal device falls back to the LTE domain, and that the terminal device successfully falls back to the LTE domain indicates that the terminal device receives the call after falling back to the LTE domain and beforethe second timer expires; and the terminal device determines, based on the success rate, whether to fall back to the LTE domain within a specific time period. In other words, if the success rate of falling back to the LTE domain and receiving the call in the LTE domain is extremely low, the terminal device does not actively fall back to the LTE domain within the specific time period; and if the success rate of falling back to the LTE domain and receiving the call in the LTE domain is extremely high, the terminal device can actively fall back to the LTE domain and receive the call in the LTE domain within the specific time period.

In a possible implementation, that the terminal device determines, based on the success rate, whether to fall back to the LTE domain within a specific time period includes: The terminal device skips falling back to the LTE domain within a specific time period if the success rate is less than a success rate threshold. In other words, if the success rate of falling back to the LTE domain and receiving the call in the LTE domain is extremely low, the terminal device does not actively fall back to the LTE domain within the specific time period.

In a possible implementation, the method further includes: When the terminal device does not fall back to the LTE domain within the specific time period, if the terminal device receives a paging message, the terminal device does not receive the INVITE message from the network or an electric leakage reminder text message within a fourth time period after receiving the paging message, and the terminal device receives the electric leakage reminder text message within a fifth time period after receiving the paging message, the terminal device falls back to the LTE domain to receive the call, where the fourth time period and the fifth time period do not overlap. The terminal device can determine a missed call by analyzing the electric leakage reminder text message (a text message including an electric leakage reminder keyword), and actively fall back to the LTE domain to receive the call.

According to a second aspect, wherein this second aspect and any of its implementations and options below are not claimed as such, a communication apparatus is provided. The communication apparatus is in a stand alone mode, and the communication apparatus includes a transceiver module and a processing module. The transceiver module is configured to receive a call message from a network in an NR domain, where the call message is for requesting to call the communication apparatus. If the transceiver module does not receive expected information from the network within a first time period after a preset call procedure, the processing module falls back to an LTE domain after the first time period to receive a call.

In a possible implementation, the preset call procedure is an RRC reconfiguration procedure between the terminal device and a fifth generation 5G access network device, and the RRC reconfiguration procedure is triggered by a service request procedure between the terminal device and a 5G core network, and the expected information includes an invitation (INVITE) message.

In a possible but not claimed implementation of the above not claimed communication apparatus of the second aspect, the preset call procedure is for the communication apparatus to send a 183 session progress message to a service concentration and continuity application server through a 5G access network device and a 5G core network, the expected information is bearer indication information or fallback indication information, the bearer indication information indicates the communication apparatus to establish or modify a dedicated bearer for voice in the NR domain, and the fallback indication information indicates the communication apparatus to fall back to the LTE domain.

In a possible but not claimed implementation of the above not claimed communication apparatus of the second aspect, the processing module is further configured to return, if the transceiver module does not receive the call in the LTE domain within a second time period after the communication apparatus falls back to the LTE domain, to the NR domain after the second time period.

In a possible but not claimed implementation of the above not claimed communication apparatus of the second aspect, the transceiver module receives the redialed call in the LTE domain within a third time period after the second time period; and the processing module returns to the NR domain after the third time period.

In a possible but not claimed implementation of the above not claimed communication apparatus of the second aspect, a length of the third time period is determined by a quantity of times the transceiver module does not receive the expected information.

In a possible but not claimed implementation of the above not claimed communication apparatus of the second aspect, the processing module returns to the NR domain after the second time period if the transceiver module does not receive, in the LTE domain, indication information indicating the communication apparatus to establish a dedicated bearer for voice in the LTE domain and does not receive the call after sending a 183 session progress message within the second time period after the processing module falls back to the LTE domain.

In a possible but not claimed implementation of the above not claimed communication apparatus of the second aspect, the processing module is further configured to count a success rate of falling back to the LTE domain, where the success rate is a ratio of a quantity of times the communication apparatus successfully falls back to the LTE domain to a total quantity of times the communication apparatus falls back to the LTE domain, and that the communication apparatus successfully falls back to the LTE domain indicates that the communication apparatus receives the call within the second time period after falling back to the LTE domain; and the processing module is further configured to determine, based on the success rate, whether to fall back to the LTE domain within a specific time period.

In a possible but not claimed implementation of the above not claimed communication apparatus of the second aspect, the processing module skips falling back to the LTE domain within a specific time period if the success rate is less than a success rate threshold.

In a possible but not claimed implementation of the above not claimed communication apparatus of the second aspect, when the processing module does not fall back to the LTE domain within the specific time period, if the transceiver module receives a paging message, does not receive the INVITE message from the network or an electric leakage reminder text message within a fourth time period after receiving the paging message, and receives the electric leakage reminder text message within a fifth time period after receiving the paging message, the processing module falls back to the LTE domain to receive the call, where the fourth time period and the fifth time period do not overlap.

According to a third aspect according to the invention, the invention also provides another claimed communication apparatus. This communication apparatus includes a processor and a transceiver, where the transceiver is configured to communicate with another communication apparatus, and when the processor executes instructions, the method according to the first aspect and any implementation thereof is performed.

According to a fourth not claimed aspect, a computer-readable storage medium is provided, where the computer-readable storage medium includes instructions. The instructions, when run on the foregoing communication apparatus, cause the communication apparatus to perform the method according to the first aspect and any implementation thereof.

According to a fifth not claimed aspect, a computer program product including instructions is provided, where the instructions, when run on the foregoing communication apparatus, cause the communication apparatus to perform the method according to the first aspect and any implementation thereof.

According to a sixth aspect according to the invention, the invention also provides a chip system. The chip system includes a processor, and is configured to support a communication apparatus in implementing a function involved in the first aspect. In a possible design, the apparatus further includes an interface circuit, and the interface circuit is configured to receive a signal from another apparatus (for example, a memory), or to send a signal to another apparatus (for example, a communication interface). The chip system may include a chip, and may further include another discrete device.

For technical effects of the second aspect to the sixth aspect, refer to the technical effects of the first aspect and any implementation thereof. Details are not repeated herein.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of an architecture of a wireless communication system according to an embodiment of this application;
FIG. 2 is a schematic diagram of a structure of a terminal device according to an embodiment of this application;
FIG. 3 is a schematic flowchart of a terminal device in an SA mode being called according to an embodiment of this application;
FIG. 4 is a schematic flowchart of another terminal device in an SA mode being called according to an embodiment of this application;
FIG. 5 is a schematic flowchart of a called terminal device in an SA mode that cannot be connected according to an embodiment of this application;
FIG. 6 is a schematic flowchart of another called terminal device in an SA mode that cannot be connected according to an embodiment of this application;
FIG. 7A and FIG. 7B are schematic flowcharts of a call receiving method according to an embodiment of this application;
FIG. 8 is a schematic diagram of an interface change of a terminal device falling back from an NR domain to an LTE domain according to an embodiment of this application;
FIG. 9A and FIG. 9B are schematic flowcharts of another call receiving method according to an embodiment of this application;
FIG. 10 is a schematic flowchart of still another call receiving method according to an embodiment of this application;
FIG. 11 is a schematic flowchart of yet still another call receiving method according to an embodiment of this application;
FIG. 12 is a schematic diagram of a structure of a communication apparatus according to an embodiment of this application;
FIG. 13 is a schematic diagram of a structure of another communication apparatus according to an embodiment of this application; and
FIG. 14 is a schematic diagram of a structure of a chip system according to an embodiment of this application.

### DESCRIPTION OF EMBODIMENTS

It should be noted that, in embodiments of this application, terms such as "first" and "second" are merely used for distinguishing between features of a same type, and cannot be understood as an indication of relative importance, a quantity, a sequence, or the like.

In the embodiments of this application, the term "in an example" or "for example" is used to represent giving an example, an illustration, or a description. Any embodiment or design scheme described as "exemplary" or "for example" in this application should not be construed as being more preferable or more advantageous than other embodiments or design schemes. Exactly, the terms such as "exemplary" or "for example" are intended to present related concepts in a specific manner.

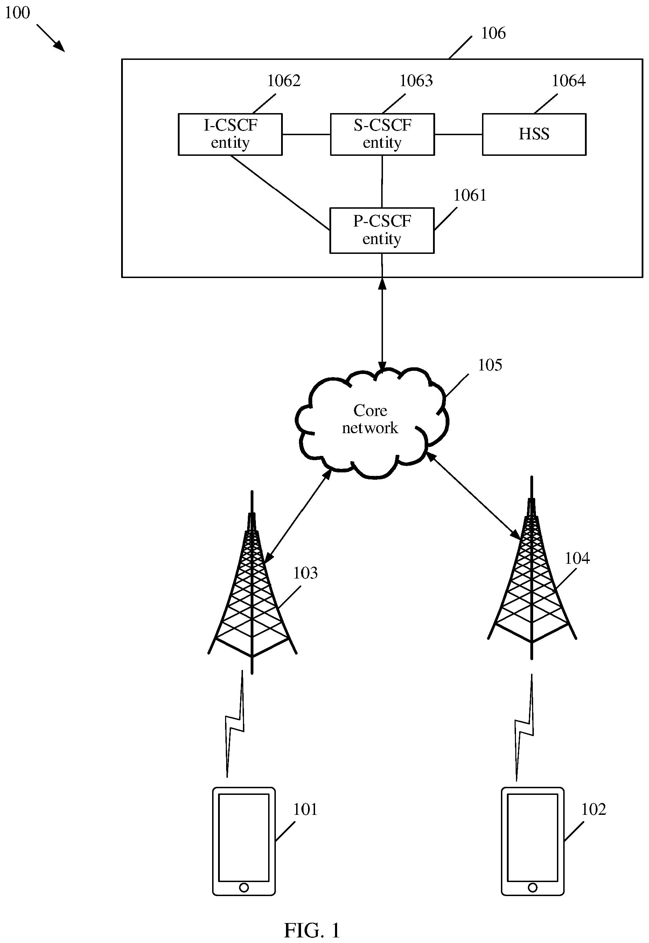

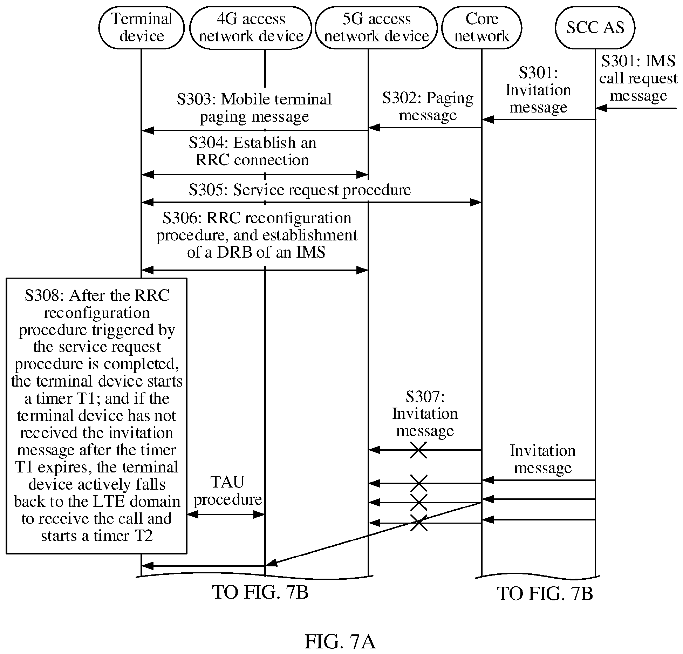

In the following description of embodiments, it should be noted that in particular the embodiments described with reference to FIG. 1, FIG. 7A & FIG: 7B refer to the steps of the claimed method steps and the features in the independent claims.

Terms used in implementation of this application are only used for explaining the specific embodiments of this application, and are not intended to this application. Embodiments of this application is described in detail below with reference to the drawings.

First, concepts involved in this application are described as follows.

Stand alone (stand alone, SA) and non-stand alone (non-stand alone, NSA): The NSA refers to joint networking of 4th generation (4th generation, 4G) communication (also known as long term evolution (long term evolution, LTE)) and 5th generation (5th generation, 5G) communication (also known as new radio (new radio, NR)), and the SA refers to 5G stand alone. There is no independent 5G core network in the NSA, but a dual connection manner is adopted, that is, a 5G access network device and a 4G access network device on a wireless side coexist, and the 5G and 4G share a 4G core network on a core network side. In the SA, the 5G core network is independent from the 4G core network, and the 4G access network device and the 5G access network device are also independent. Embodiments of this application use the SA as an example, but is not intended to be limited thereto.

Internet protocol (IP) multimedia subsystem (IP multimedia subsystem, IMS): It is a brand-new multimedia service form that can meet the needs of customers for newer and more diverse multimedia services. The IMS is considered to be the core technology of the next generation communication network and can realize the integration of mobile networks and fixed networks. A session initialization protocol (SIP) is used in the IMS, so that IP-based voice transmission (voice over internet protocol, VoIP) can be implemented in LTE or NR, which is referred to as long term evolution voice bearer (voice over LTE, VoLTE) in LTE, and referred to as new radio voice bearer (voice over NR, VoNR) in NR.

As shown in FIG. 1, a wireless communication system 100 provided in this embodiment of this application includes a first terminal device 101, a second terminal device 102, a core network 105, an IMS 106, a first access network device 103 that provides a 5G network for the first terminal device 101, and a second access network device 104 that provides a 4G network and a 5G network for the second terminal device 102. The first terminal device 101 may be a calling terminal device, and the second terminal device 102 may be a called terminal device. In this application, the devices (for example, the first access network device 103, the second access network device 104, the core network 105, and the IMS 106) other than the terminal devices (for example, the first terminal device 101 and the second terminal device 102) may be collectively referred to as a network (network, NW).

The IMS 106 may include a proxy-call session control function (proxy-call session control function, P-CSCF) entity 1061, an interrogating-call session control function (interrogating-call session control function, I-CSCF) entity 1062, a serving-call session control function (serving-call session control function, I-CSCF) entity 1063, and a home subscriber server (home subscriber server, HSS) 1064.

The P-CSCF entity 1061 is a first connection point from the access network to the IMS 106. All session messages initiated from terminal devices that support the IMS and session messages terminated from terminal devices that support the IMS need to be forwarded through the P-CSCF entity 1061. The P-CSCF entity 1061 may be configured to forward an IMS registration request from the terminal device to the S-CSCF entity 1063, and forward registration response information to the terminal device.

The I-CSCF entity 1062 can connect the S-CSCF entity 1063 and the P-CSCF entity 1061, and is used to provide an entrance to a home network for the terminal device. In the IMS registration process, the P-CSCF entity 1061 may forward the IMS registration request from the terminal device to the I-CSCF entity 1062. The I-CSCF entity 1062 may query the HSS 1064 in the IMS 106 and select an S-CSCF entity 1063 for the terminal device. In a calling process, a call message to the IMS network is first routed to the I-CSCF entity 1062. The I-CSCF entity 1062 may query address information of the S-CSCF entity 1063 registered by the user for the terminal device through the HSS 1064 in the IMS 106, and then route the message to the S-CSCF entity 1063.

The S-CSCF entity 1063 is a control core of the IMS 106 and provides session control and registration functions for the terminal device. The S-CSCF entity 1063 is configured to receive the IMS registration request forwarded by the P-CSCF entity 1061, and cooperate with the HSS 1064 to perform authentication on the terminal device. After determining that the authentication succeeds, the S-CSCF entity 1063 obtains subscription information of the terminal device from the HSS 1064. The S-CSCF entity 1063 is further configured to connect to each application server. The S-CSCF entity 1063 is further configured to trigger the application server to perform an operation and route a request of the terminal device to the corresponding application server.

HSS 1064 is configured to store all user and service-related data, such as user identity, subscription information, and access information.

It should be understood that although the wireless communication system 100 shown in FIG. 1 only includes two terminal devices and two access network devices, the wireless communication system 100 may include fewer and/or more terminal devices, and may alternatively include more access network devices. In addition, the wireless communication system 100 may further include an access network device that provides a 2G/3G/4G network for the first terminal device 101, and the wireless communication system 100 may further include an access network device that provides a 2G/3G network for the second terminal device 102.

Taking the second terminal device 102 as an example, the second terminal device 102 may generate the IMS registration request when events occur, for example, booting, restarting, exiting airplane mode, hot-swappable card, public land mobile network (PLMN) change, tracking area update (tracking area update, TAU), and IMS registration failure. The second terminal device 102 may then send the IMS registration request to the P-CSCF entity 1061 in the IMS 106 through the second access network device 102 and the core network 105. The second terminal device 102 may further receive a registration response message from the IMS 106 through the second access network device 102 and the core network 105. For example, the IMS registration request may be an initial registration request. The initial registration request may include user information, terminal capability information, and the like. Correspondingly, the registration response message may be a session initialization protocol (session initialization protocol, SIP) 401 message. The 401 message may include authentication information, and is used to require the second terminal device 102 to perform authentication. For another example, the IMS registration request may be a challenging (challenging) registration request. The challenging registration request may include the authentication information. Correspondingly, the registration response message may be a SIP 200 OK message, and indicates that the IMS registration succeeds.

When the second terminal device 102 successfully registers with the IMS, the second terminal device 102 can implement a voice service through the IMS. For example, the second terminal device 102 can call another terminal device (for example, the first terminal device 101) by dialing a mobile phone number of the terminal device, or answer a call from another terminal device (for example, the first terminal device 101).

The terminal device (for example, the first terminal device 101 or the second terminal device 102) involved in embodiments of this application may be a device with a wireless transceiver function, and the terminal device may be mobile or fixed. The terminal device may be deployed on land (for example, indoor or outdoor, or handheld or vehicle-mounted); or may be deployed on a water surface (for example, a ship); or may alternatively be deployed in the air (for example, an airplane, a balloon, or a satellite). The terminal device may be user equipment (user equipment, UE), an access terminal, a terminal unit, a subscriber unit (subscriber unit), a terminal station, a mobile station (mobile station, MS), a mobile console, a remote station, a remote terminal, a mobile device, a wireless communication device, a terminal agent, a terminal apparatus, or the like in the 4G network, the 5G network, or a future evolved public land mobile network (public land mobile network, PLMN). For example, the terminal device may be a mobile phone, a tablet computer, a notebook computer, a smart band, a smartwatch, a headset, a smart speaker, a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A specific type and structure and the like of the terminal device are not limited in this embodiment of this application.

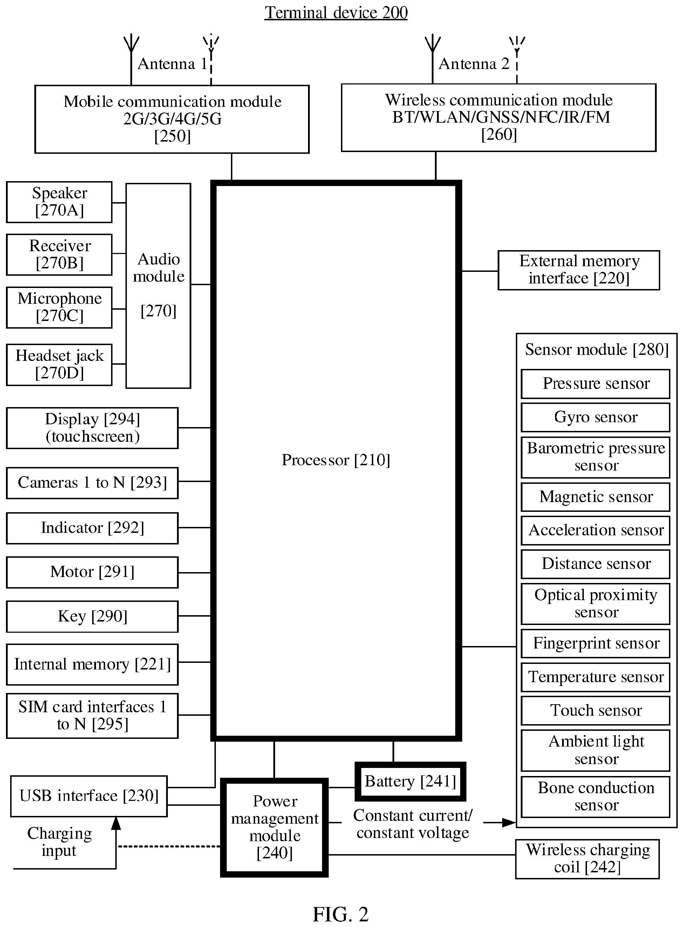

For example, the terminal device is a mobile phone. FIG. 2 shows a possible structure of the terminal device. The terminal device 200 may include a processor 210, an external memory interface 220, an internal memory 221, a universal serial bus (universal serial bus, USB) interface 230, a power management module 240, a battery 241, a wireless charging coil 242, an antenna 1, an antenna 2, a mobile communication module 250, a wireless communication module 260, an audio module 270, a speaker 270A, a receiver 270B, a microphone 270C, a headset jack 270D, a sensor module 280, a key 290, a motor 291, an indicator 292, a camera 293, a display 294, a subscriber identification module (subscriber identification module, SIM) card interface 295, and the like.

The sensor module 280 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application does not constitute a specific limitation on the terminal device 200. In some other implementations of this application, the terminal device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include a central processing unit (central processing unit, CPU), an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent devices, or may be integrated into one or more processors. For example, the processor 210 may be the application processor AP. Alternatively, the processor 210 may be integrated in a system on chip (system on chip, SoC). Alternatively, the processor 210 may be integrated in an integrated circuit (integrated circuit, IC) chip. The processor 210 may include an analog front end (analog front end, AFE) and a micro-controller unit (micro-controller unit, MCU) in the IC chip.

The controller may be a nerve center and a command center of the terminal device 200. The controller may generate an operation control signal based on instruction operation code and a timing signal, to complete control of instruction fetching and instruction execution.

A memory may further be disposed in the processor 210, to store instructions and data. In some implementations, the memory in the processor 210 is a cache memory. The memory may store instructions or data recently used or repeatedly used by the processor 210. If the processor 210 needs to use the instruction or the data again, the processor 210 may directly invoke the instruction or the data from the memory. This avoids repeated storage and reading, and reduces a waiting time of the processor 210, thereby improving system efficiency.

In some implementations, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and the like.

It can be understood that the interface connection relationship between the modules illustrated in the embodiments of this application is merely an example for description, and does not constitute a limitation on the structure of the terminal device 200. In some other implementations of this application, the terminal device 200 may use an interface connection manner different from that in the foregoing implementations or a combination of a plurality of interface connection manners.

The power management module 240 is configured to receive a charging input from a charger. The charger may be a wireless charger (for example, a wireless charging base of the terminal device 200 or another device that can wirelessly charge the terminal device 200), or may be a wired charger. For example, the power management module 240 may receive a charging input from the wired charger by using the USB interface 230. The power management module 240 may receive a wireless charging input by using the wireless charging coil 242 of the electronic device.

The power management module 240 may supply power to the electronic device while charging the battery 241. The power management module 240 receives an input of the battery 241, and supplies power to the processor 210, the internal memory 221, the external memory interface 220, the display 294, the camera 293, the wireless communication module 260, and the like. The power management module 240 may be further configured to monitor parameters such as a battery capacity, a battery cycle count, and a battery health status (leakage and impedance) of the battery 241. In some other implementations, the power management module 240 may alternatively be disposed in the processor 210.

A wireless communication function of the terminal device 200 may be implemented by using the antenna 1, the antenna 2, the mobile communication module 250, the wireless communication module 260, a modem processor, a baseband processor, and the like.

The antenna 1 and the antenna 2 are configured to transmit and receive an electromagnetic wave signal. Each antenna in the terminal device 200 may be configured to cover a single or a plurality of communication bands. Different antennas may be further multiplexed to improve antenna utilization. For example, the antenna 1 may be multiplexed to a diversity antenna of a wireless local area network. In some other implementations, the antenna may be used together with a tuning switch.

The mobile communication module 250 can provide a solution for wireless communication including 2G/3G/4G/5G and the like to be applied to the terminal device 200. The wireless communication module 260 may provide a solution to wireless communication applicable to the terminal device 200, for example, wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. In some implementations, in the terminal device 200, the antenna 1 is coupled to the mobile communication module 250, and the antenna 2 is coupled to the wireless communication module 260, so that the terminal device 200 can communicate with a network and another device by using a wireless communication technology.

The terminal device 200 implements a display function by using the GPU, the display 294, the application processor, and the like. The GPU is a microprocessor for image processing, and connects the display 294 and the application processor. The GPU is configured to perform mathematical and geometric calculation, and is configured to render an image. The processor 210 may include one or more GPUs. The one or more GPUs execute program instructions to generate or change display information.

The display 294 is configured to display images, videos, and the like. The display 294 may include a display panel. In some implementations, the terminal device 200 may include 1 or N displays 294. N is a positive integer greater than 1.

The terminal device 200 may implement a photographing function by using the ISP, the camera 293, the video codec, the GPU, the display 294, the application processor, and the like. The ISP is configured to process data fed back by the camera lens 293. In some implementations, the ISP may be disposed in the camera 293. The camera lens 293 is configured to capture a static image or a video. In some implementations, the terminal device 200 may include one or N cameras 293, where N is a positive integer greater than 1.

The external memory interface 220 may be configured to connect to an external storage card such as a micro SanDisk (micro SanDisk, Micro SD) card, to expand a storage capability of the terminal device 200. The external storage card communicates with the processor 210 by using the external memory interface 220 to implement a data storage function. For example, files such as music and a video are stored in the external memory card.

The internal memory 221 may be configured to store computer-executable program code. The executable program code includes instructions. The processor 210 runs the instruction stored in the internal memory 221, to implement various functional applications and data processing of the terminal device 200. In addition, the internal memory 221 may include a highspeed random access memory, and may further include a non-volatile memory, for example, at least one magnetic disk storage device, a flash memory device, or a universal flash storage (universal flash storage, UFS), and the like.

The terminal device 200 may use the audio module 270, the speaker 270A, the receiver 270B, the microphone 270C, the headset jack 270D, the application processor, and the like to implement an audio function, for example, music playback and sound recording.

The audio module 270 is configured to convert digital audio information into an analog audio signal for output, and may also be configured to convert an analog audio input into a digital audio signal. In some implementations, the audio module 270 may be disposed in the processor 210, or some functional modules of the audio module 270 may be disposed in the processor 210. The speaker 270A, also referred to as a "loudspeaker", is configured to convert an audio electrical signals into a sound signal. The receiver 270B, also referred to as a "receiver", is configured to convert an audio electrical signal into a sound signal. The microphone 270C, also referred to as a "mike" or a "microphone", is configured to convert a sound signal into an electrical signal. At least one microphone 270C may be arranged in the terminal device 200. The headset jack 270D is configured to connect to a wired headset. The headset jack 270D may be a USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The key 290 includes a power-on key, a volume key, and the like. The key 290 may be a mechanical key, or may be a touch key. The terminal device 200 may receive a key input, and generate a key signal input related to a user setting and function control of the terminal device 200. The motor 291 may generate vibrating alerts. The motor 291 may be configured to provide an incoming call vibration prompt, or may be configured to provide a touch vibration feedback. The indicator 292 may be an indicator light, which may be configured to indicate a charging state and a power change, or to indicate a message, a missed call, a notification, or the like. The SIM card interface 295 is configured to connect a SIM card. The SIM card may be inserted into the SIM card interface 295 or withdrawn from the SIM card interface 295, thereby getting in contact with or being separated from the terminal device 200. The terminal device 200 may support 1 or N SIM card interfaces, where N is a positive integer greater than 1. The SIM card interface 195 can support a nano SIN (Nano SIM) card, a micro SIM (Micro SIM) card, a SIM card, and the like. In some implementations, the terminal device 200 uses an embedded (embedded SIM, eSIM) SIM card. The eSIM card may be embedded in the terminal device 200 and cannot be separated from the terminal device 200.

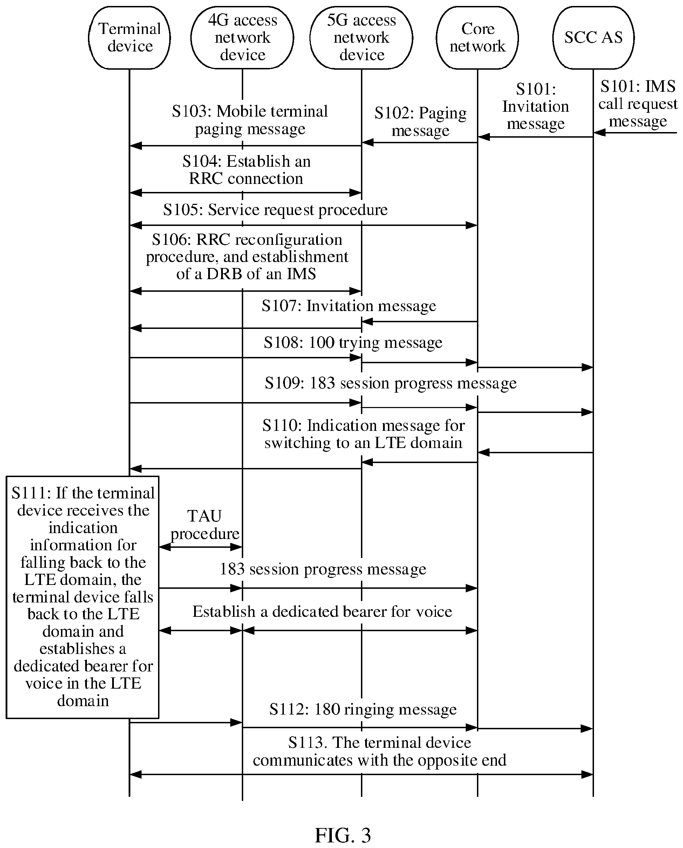

FIG. 3 shows a normal procedure in which a terminal device (namely, the second terminal device described above) falls back to an LTE domain to be called. The procedure includes steps S101 to S113, where steps S102 to S106 are optional.

S101: A service centralization and continuity application server (service centralization and continuity application server, SCC AS) receives an IMS call request message from a calling party (namely, the first terminal device described above) and sends an invitation (INVITE) message to a 5G core network (represented by a core network in the figure of this application).

The SCC AS is used to enable the terminal device to access the IMS domain to complete IMS session establishment and control.

In this application, the invitation (INVITE) message is for requesting a call to the terminal device. The invitation (INVITE) message includes a from (From) tag, a to (To) tag, and a call-identity (Call-ID) tag. The from (From) tag indicates a source address of the call. The to (To) tag indicates a destination address of the call. The call-identity (Call-ID) tag serves as a globally unique identifier for the call.

S102: The 5G core network sends a paging (paging) message to a 5G access network device.

The paging (paging) message is used to establish a session between the 5G core network and 5G access network device.

S103: The 5G access network device sends a mobile terminal paging (mobile terminal paging, MT paging) message to the terminal device.

The mobile terminal paging message is for requesting to call the terminal device The mobile terminal paging message includes an identifier of the called terminal device (for example, a temporary mobile subscriber identity (temporary mobile subscriber identity, TMSI)).

S104: The terminal device establishes an RRC connection with the 5G access network device.

S105: The terminal device performs a service request procedure (service request procedure) with the 5G core network through the 5G access network device.

The purpose of the service request procedure is to change 5G system mobility management (5G system mobility management, 5GMM) of the terminal device from a 5GMM idle state (5GMM-IDLE) to a 5GMM connected state (5GMM-CONNECTED), and to establish or restore a bearer with a 5G quality identity (5G quality identity, 5QI) of 5. The bearer with the 5QI of 5 refers to a non-guaranteed bit rate (guaranteed bit rate, Non-GBR) bearer for transmitting IMS signaling.

S106: The 5G access network device and the terminal device perform an RRC reconfiguration (reconfiguration) procedure to establish a data resource bearer (data resource bearer, DRB) of the IMS.

The RRC reconfiguration procedure is triggered by the service request procedure.

It should be noted that steps S102 to S106 are optional. If the 5GMM of the terminal device is already in the 5GMM connected state (5GMM-CONNECTED), it is not necessary to perform steps S102 to S106.

Through the establishment of the DRB, the terminal device can determine that the network side is about to send a call or text message, and receive IMS data through the DRB.

S107: The 5G core network sends an invitation (INVITE) message to the terminal device through the 5G access network device.

For the invitation (INVITE) message, refer to the description of the invitation (INVITE) message in step S101, and details are not described herein again.

S108: The terminal device sends a 100 trying (100 Trying) message to the SCC AS through the 5G access network device and the 5G core network.

The 100 trying (100 Trying) message indicates that the invitation (INVITE) message has been received. The 100 trying (100 Trying) message includes the same from (From) tag, the same to (To) tag, and the same call-identity (Call-ID) tag as in the invitation (INVITE) message, so that the SCC AS can associate the 100 trying (100 Trying) message with the sent invitation (INVITE) message.

S109: The terminal device sends a 183 session progress (183 session progress) message to the SCC AS through the 5G access network device and the 5G core network.

The 183 session progress (183 session progress) message indicates progress information of establishing a session. The message includes a reason phrase (reason-phrase), a header field, and a message body. The reason phrase indicates the reason. The header field or the message body indicates more progress information of establishing the session.

S110: The SCC AS sends, to the terminal device through the 5G core network and 5G access network device, indication information for falling back to the LTE domain, or indication information for establishing or modifying a dedicated bearer for voice.

The indication information for falling back to the LTE domain is for a scenario where the terminal device does not support VoNR.

S111: If the terminal device receives the indication information for falling back to the LTE domain, the terminal device falls back to the LTE domain and establishes a dedicated bearer for voice in the LTE domain.

The terminal device may fall back to the LTE domain through a TAU procedure with a 4G access network device. The terminal device further sends a 183 session progress (183 session progress) message to the SCC AS through the 4G access network device and a 4G core network. For the 183 session progress (183 session progress) message, refer to the foregoing description. The terminal device establishes the dedicated bearer for the voice with the 4G core network through the 4G access network device.

S112: The terminal device sends a 180 ringing (180 Ringing) message to the SCC AS through the 4G access network device and the 4G core network.

The 180 ringing (180 Ringing) message indicates that the terminal device rings. If the user chooses to answer the call, the call succeeds and the voice data of the call is to be transmitted on the dedicated bearer for the voice.

S113: The terminal device communicates with the opposite end (calling party).

The terminal device communicates with the opposite end (calling party) through the 4G access network device, the 4G core network, and the SCC AS.

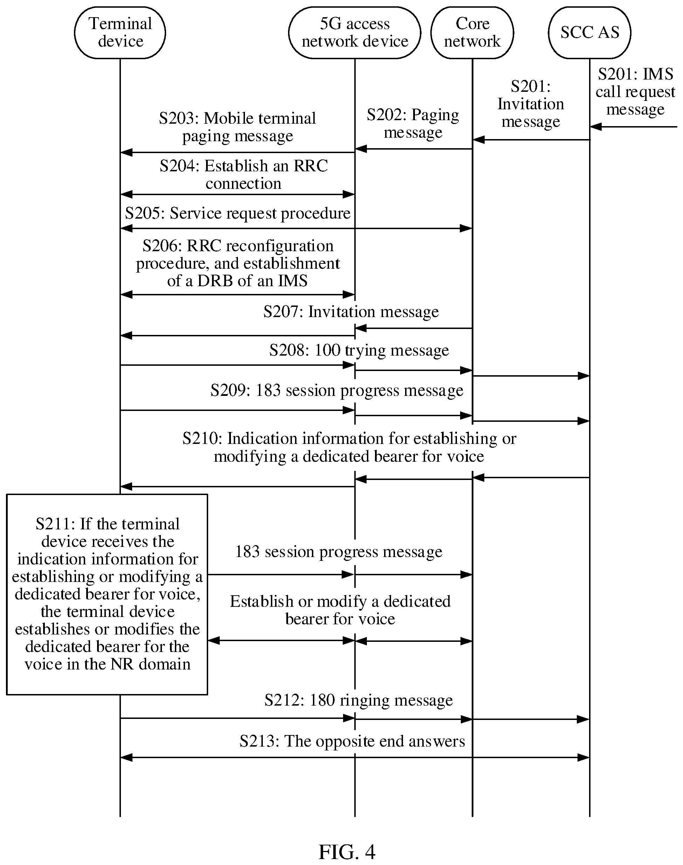

FIG. 4 shows a normal procedure in which a terminal device (namely, the second terminal device described above) in an SA mode receives a call in an LTE domain. The procedure includes steps S201 to S213, where for steps S201 to S209, refer to steps S101 to S109.

S210: The SCC AS sends, to the terminal device through the 5G core network and 5G access network device, indication information for establishing or modifying a dedicated bearer for voice.

The indication information for establishing or modifying a dedicated bearer for voice is for a scenario where the terminal device supports VoNR.

S211: If the terminal device receives the indication information for establishing or modifying a dedicated bearer for voice, the terminal device establishes or modifies the dedicated bearer for the voice in the NR domain.

The terminal device further sends a 183 session progress (183 session progress) message to the SCC AS through the 5G access network device and a 5G core network. For the 183 session progress (183 session progress) message, refer to the foregoing description. The terminal device establishes or modifies the dedicated bearer for the voice through the 5G access network device and the 5G core network.

S212: The terminal device sends a 180 ringing (180 Ringing) message to the SCC AS through the 5G access network device and the 5G core network.

The 180 ringing (180 Ringing) message indicates that the terminal device rings. If the user chooses to answer the call, the call succeeds and the voice data of the call is to be transmitted on the dedicated bearer for the voice.

S213: The terminal device communicates with the opposite end (calling party).

The terminal device communicates with the opposite end (calling party) through the 5G access network device, the 5G core network, and the SCC AS.

In a process in which mobile communication operators gradually build SA, there is still a problem of imperfect SA function of a network side. In this case, when a terminal device in an SA mode is called, there is often a problem that the terminal device cannot connect the call due to a network side failure.

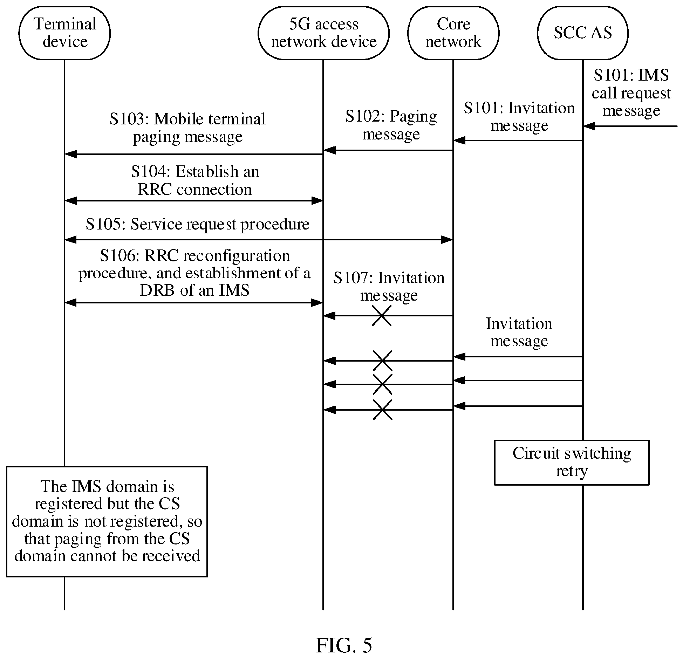

As shown in FIG. 5, a possible scenario where the called terminal device in the SA mode cannot be connected is as follows: Due to a network failure or other reasons, although steps S101 to S106 (or S201 to S206) in FIG. 3 are successfully performed, the invitation (INVITE) message sent by the SCC AS in S107 (or S207) cannot be received by the 5G access network device. After the SCC AS retransmits the invitation (INVITE) message a plurality of times, a circuit switching retry (circuit switching retry, CS Retry) is performed to page the terminal device in a circuit switching (circuit switching, CS) domain. However, because the terminal device is in the SA mode and has only registered the IMS domain but not the CS domain, the terminal device cannot receive the paging from the CS domain.

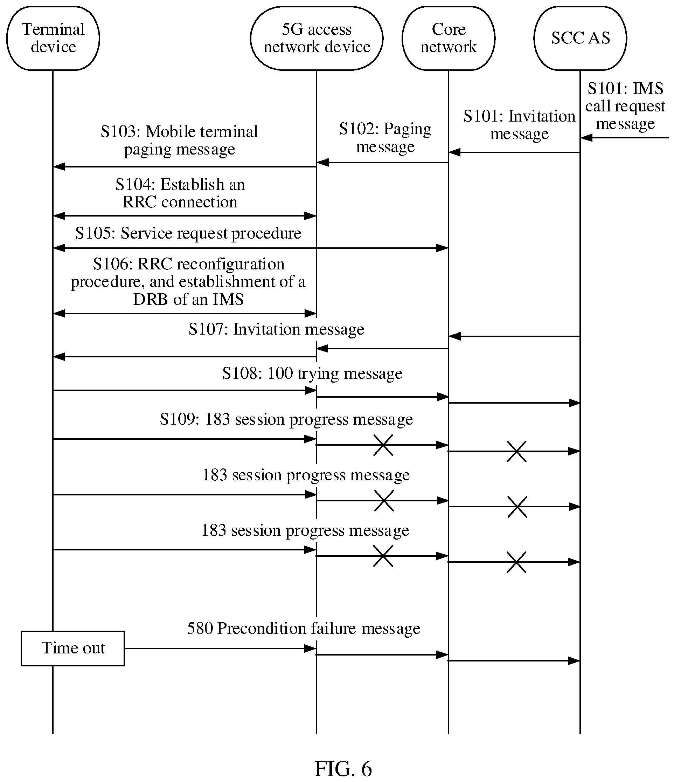

As shown in FIG. 6, another possible scenario where the called terminal device in the SA mode cannot be connected is as follows: Due to difficulty in uplink transmission caused by a network failure or sudden interference or other reasons, although steps S101 to S108 (or S201 to S208) in FIG. 3 are successfully performed, when the terminal device sends a 183 session progress (183 session progress) message in step S109 (or S209), the indication information for falling back to the LTE domain or the indication information for establishing or modifying the dedicated bearer for the voice is not received. The terminal device retransmits the 183 session progress (183 session progress) message a plurality of times. After timeout, the terminal device sends a 580 resource precondition failure (precondition failure) message, indicating that the paging fails. The reason for the paging failure in this scenario is that an evolved packet system fallback (evolved packet system fallback, EPS FB) procedure is completely controlled by the network side. Even if a network failure causes the EPS FB procedure to be abnormal, the terminal device side can only passively wait for indications from the network side.

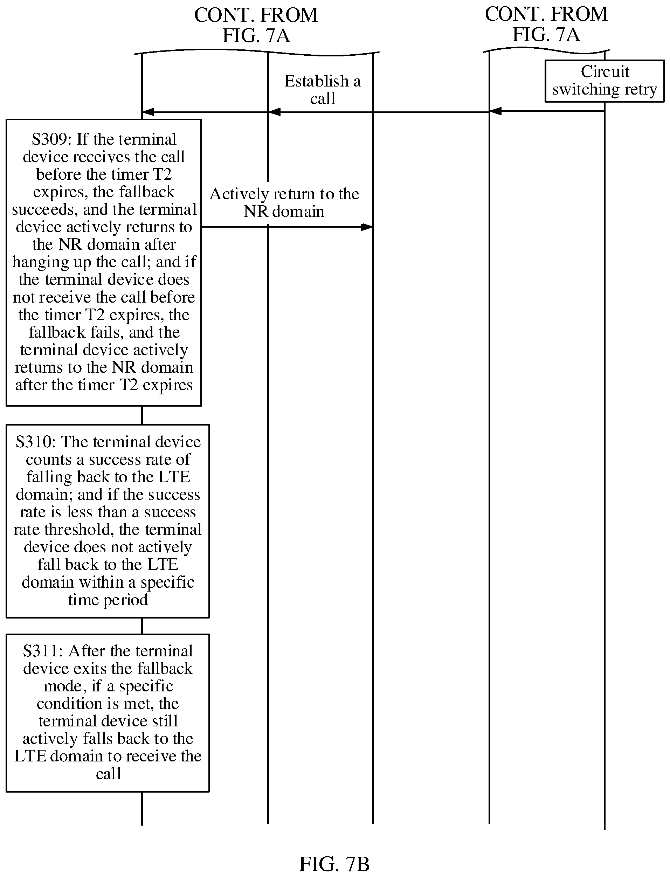

An embodiment of this application provides a call receiving method, to solve the problem of that a call cannot be connected as shown in FIG. 5. As shown in FIG. 7A and FIG. 7B, the method includes steps S301 to S311, where for steps S301 to S306, refer to the foregoing steps S101 to S106, and details are not described herein again.

S307: The invitation (INVITE) message sent by the SCC AS cannot be received by the 5G access network device, and the SCC AS retransmits the invitation (INVITE) message a plurality of times.

S308: After the RRC reconfiguration procedure triggered by the service request procedure (service request procedure) is completed, the terminal device starts a timer T1. If the terminal device has not received IMS data such as the invitation (INVITE) message after the timer T1 expires, the terminal device actively falls back to the LTE domain to receive the call and starts a timer T2.

Duration of the timer T1 and the timer T2 may be determined based on a retransmission behavior of the network side. The timer T1 is less than a total time of network retransmission, and the timer T2 is greater than the total time of network retransmission. For example, the timer T1 is 4 seconds and the timer T2 is 20 seconds.

The terminal device may determine whether the service request procedure is completed by receiving a service accept (service accept) message. When receiving the service accept (service accept) message, it can be determined that the service request procedure is completed. The terminal device receives the RRC reconfiguration message from the network side and feeds back an RRC reconfiguration complete message, indicating that the RRC reconfiguration procedure is completed. In addition, the terminal device may determine, through the establishment of the DRB corresponding to the IMS, that the network side is to send a call or text message. The terminal device may determine whether there is a call or text message by detecting whether there is IMS data such as the invitation (INVITE) message in the DRB corresponding to the IMS bearer (packet data unit (packet data unit, PDU) session identifier).

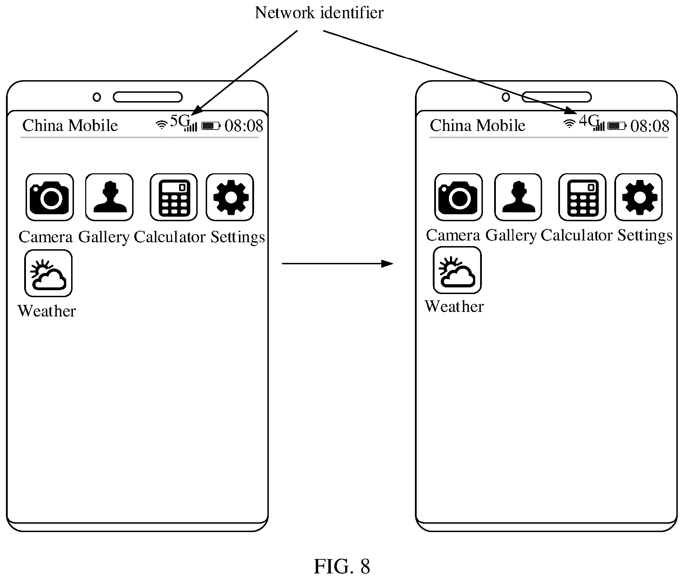

The terminal device may actively fall back to the LTE domain by initiating a TAU procedure with the 4G access network device. The terminal device may start the timer T2 when initiating the TAU procedure. As shown in FIG. 8, when the terminal device falls back from the NR domain to the LTE domain, the network identifier changes from 5G to 4G.

When the terminal device receives a call in the LTE domain, it means that the terminal device receives an invitation (INVITE) message or a CS fallback (CS fallback, CSFB) indication message in the LTE domain (through the 4G access network device).

S309: If the terminal device receives the call before the timer T2 expires, the fallback succeeds, and the terminal device actively returns to the NR domain after hanging up the call; and if the terminal device does not receive the call before the timer T2 expires, the fallback fails, and the terminal device actively returns to the NR domain after the timer T2 expires.

After the SCC AS retransmits the invitation (INVITE) message a plurality of times, the circuit CS Retry is performed to page the terminal device in the CS domain. The SCC AS establishes a call with the terminal device through the 4G core network (represented by the core network in the figure) and the 4G access network device, so that the terminal device receives the call.

The terminal device actively returns to the NR domain through a reselection, switching, or redirection procedure. As shown in FIG. 8, when the terminal device returns from the LTE domain to the NR domain, the network identifier changes from 4G to 5G.

S310: The terminal device counts a success rate of falling back to the LTE domain; and if the success rate is less than a success rate threshold, the terminal device does not actively fall back to the LTE domain within a specific time period (that is, exits the active fallback mode).

The success rate of falling back to the LTE domain is a ratio of a quantity of times the terminal device successfully falls back to the LTE domain to a total quantity of times the terminal device falls back to the LTE domain, and that the terminal device successfully falls back to the LTE domain indicates that the terminal device receives the call within the second time period after falling back to the LTE domain.

That the terminal device does not actively fall back to the LTE domain within the specific time period (that is, exits the active fallback mode) means that after the RRC reconfiguration procedure triggered by the service request procedure is completed, the terminal device starts the timer T1. If the terminal device has not received IMS data such as the invitation (INVITE) message after the timer T1 expires, the terminal device does not actively fall back to the LTE domain. In other words, if the success rate of falling back to the LTE domain and receiving the call in the LTE domain is extremely low, the terminal device does not actively fall back to the LTE domain within the specific time period.

In addition, if the success rate is greater than or equal to the success rate threshold, in the next call, the terminal device may perform step S308 when the condition of step S308 is met. In other words, if the success rate is greater than or equal to the success rate threshold, after the RRC reconfiguration procedure triggered by the service request procedure (service request procedure) is completed, the terminal device starts the timer T1. If the terminal device has not received IMS data such as the invitation (INVITE) message after the timer T1 expires, the terminal device actively falls back to the LTE domain to receive the next call and starts the timer T2.

S311: After the terminal device exits the fallback mode (that is, when the terminal device calculates that the success rate is less than the success rate threshold), the terminal device still actively falls back to the LTE domain to receive the call if specific conditions are met.

After the terminal device exits the fallback mode, if the mobile terminal paging (MT paging) message is received again, a timer T5, a timer T6, and a timer T7 are started. If IMS data such as the invitation (INVITE) message or an electric leakage reminder text message is not received before the timer T5 expires, and the electric leakage reminder text message is received after the timer T6 expires and before the timer T7 expires, the terminal device actively falls back to the LTE domain to receive the call. The timer T6 is optional. In other words, if the electric leakage reminder text message is received before the timer T7 expires, the terminal device actively falls back to the LTE domain to receive the call. The duration of the timer T7 is greater than the duration of the timer T6, and the duration of the timer T6 is greater than the duration of the timer T5. The duration of the timer T5, the timer T6, and the timer T7 is determined based on an electric leakage reminder behavior on the network side.

According to this step, the terminal device can determine a missed call by analyzing the electric leakage reminder text message (a text message including an electric leakage reminder keyword), and can then actively fall back to the LTE domain through the TAU procedure to receive the call. For how to fall back to the LTE domain and how to determine that the IMS data is received, refer to step S308, and details are not described herein again.

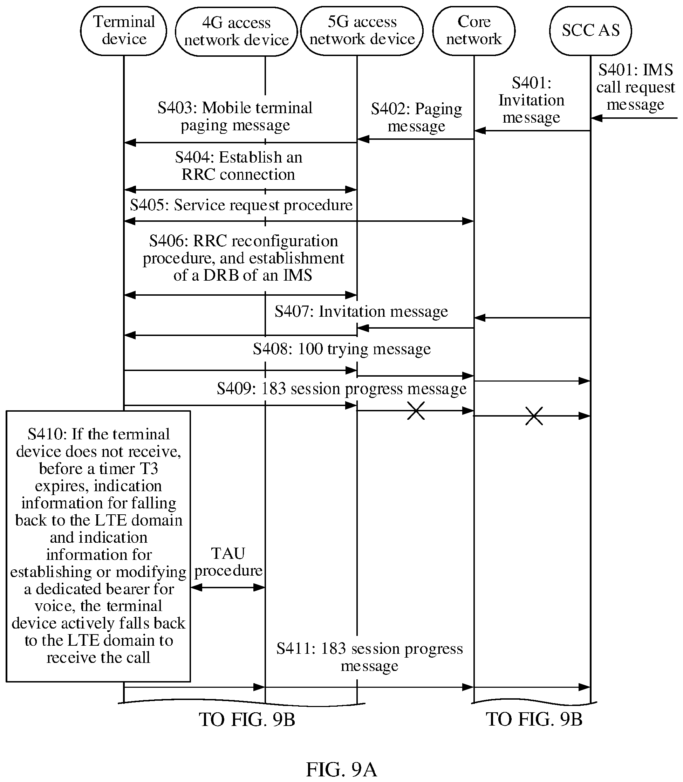

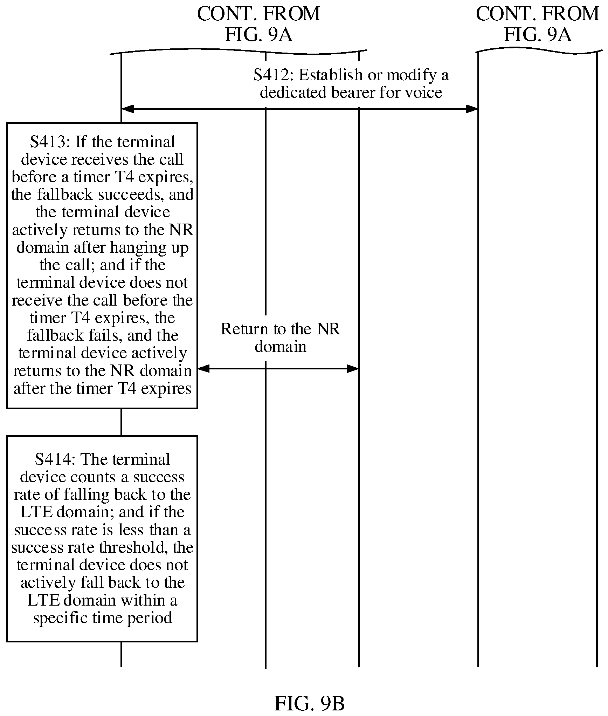

An embodiment of this application provides another call receiving method, to solve the problem that a called cannot be connected shown in FIG. 6. As shown in FIG. 9A and FIG. 9B, the method includes steps S401 to S414, where for steps S401 to S408, refer to the foregoing steps S101 to S108, and details are not described herein again.

S409: The terminal device sends a 183 session progress (183 session progress) message to the 5G access network device, starts the timer T3, and monitors the indication information for falling back to the LTE domain (namely, fallback indication information) and indication information for establishing or modifying the dedicated bearer for the voice (namely, bearer indication information).

The duration of the timer T3 is less than a total 183 retransmission time.

S410: If the terminal device does not receive, before the timer T3 expires, the indication information for falling back to the LTE domain and the indication information for establishing or modifying the dedicated bearer for the voice, the terminal device actively falls back to the LTE domain to receive the call.

The terminal device may actively fall back to the LTE domain through the TAU procedure with the 4G access network device.

S411: The terminal device sends a 183 session progress (183 session progress) message to the 4G core network through the 4G access network device, and starts the timer T4.

The duration of the timer T4 is customized.

S412: The terminal device and the 4G core network establish or modify the dedicated bearer for the voice in the LTE domain.

The terminal device communicates with the opposite end (calling party) through the 4G access network device, the 4G core network, and the SCC AS.

S413: If the terminal device receives the call before the timer T4 expires, the fallback succeeds, and the terminal device actively returns to the NR domain after hanging up the call; and if the terminal device does not receive the call before the timer T4 expires, the fallback fails, and the terminal device actively returns to the NR domain after the timer T4 expires.

Optionally, the terminal device may start a timer T8 after the timer T4 expires, and then actively return to the NR domain when the timer T8 expires, to avoid missing calls that may be redialed by the calling party before the timer T8 expires.

Further, if the following case occurs (continuously) a plurality of times (that is, a quantity of occurrences is greater than a quantity threshold): after the terminal device sends the 183 session progress (183 session progress) message to the 5G access device, the fallback indication information and the bearer indication information are not received before the timer T3 expires, the terminal device may start the timer T8 after the timer T4 expires. The length of the timer T8 may be determined by a quantity of occurrences of the foregoing case. A larger quantity of occurrences of the case indicates a longer length of the timer T8. A smaller quantity of occurrences of the case indicates a shorter length of the timer T8. In particular, the length of the timer T8 increases in proportion to the quantity of occurrences of the case.

In addition, if it also occurs on the terminal device in the LTE domain that the terminal device sends the 183 session progress (183 session progress) message, but does not receive, in the LTE domain, the indication information indicating the terminal device to establish the dedicated bearer for the voice in the LTE domain, the terminal device can return to the NR (without waiting for the timer T8 to expire).

S414: The terminal device counts a success rate of falling back to the LTE domain; and if the success rate is less than a success rate threshold, the terminal device does not actively fall back to the LTE domain within a specific time period (that is, exits the active fallback mode).

For the success rate of falling back to the LTE domain, refer to step S310, and details are not described herein again.

If the success rate is greater than or equal to the success rate threshold, in the next call, the terminal device may perform step S410 when the condition of step S410 is met. In other words, if the success rate is greater than or equal to the success rate threshold, the terminal device sends the 183 session progress (183 session progress) message to the 5G access network device and starts the timer T3. If the terminal device does not receive, before the timer T3 expires, the indication information for falling back to the LTE domain and the indication information for establishing or modifying the dedicated bearer for the voice, the terminal device actively falls back to the LTE domain to receive the next call.

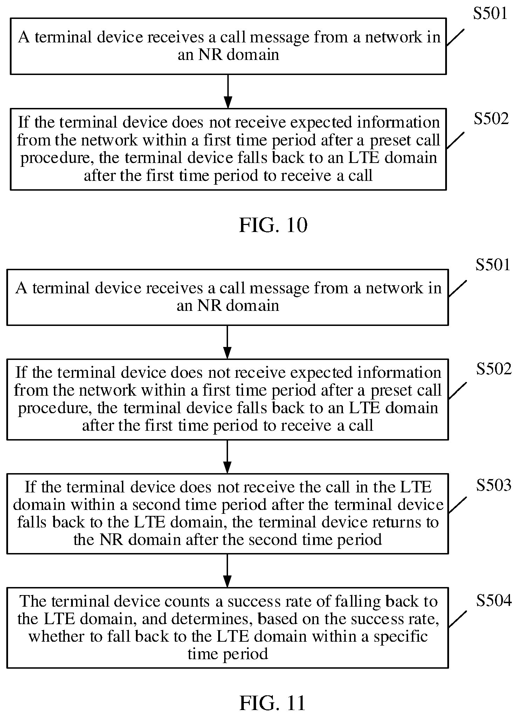

To sum up, an embodiment of this application provides another call receiving method, as shown in FIG. 10. The method includes:
S501: A terminal device receives a call message from a network in an NR domain.

The terminal device is in an SA mode. The call message is for requesting to call the terminal device. When the terminal device is in a 5GMM idle state, the call message may be the mobile terminal paging (MT paging) message described above. When the terminal device is in a 5GMM connected state, the call message may be the invitation (INVITE) message described above. For details, refer to the related descriptions in steps S101 to S106.

S502: If the terminal device does not receive expected information from the network within a first time period after a preset call procedure, the terminal device falls back to an LTE domain after the first time period to receive a call.

In a possible implementation, the preset call procedure is an RRC reconfiguration procedure triggered by a service request procedure (service request procedure), and the expected information is IMS data such as the invitation (INVITE) message. For this implementation, refer to step S308. The first time period refers to a time period from when the timer T1 starts to when the timer T1 expires.

In another possible implementation, the preset call procedure is to send a 183 session progress (183 session progress) message, the expected information is bearer indication information or fallback indication information, the bearer indication information indicates the terminal device to establish or modify a dedicated bearer for voice in the NR domain, and the fallback indication information indicates the terminal device to fall back to the LTE domain. For this implementation, refer to steps S409 and S410. The first time period refers to a time period from when the timer T3 starts to when the timer T3 expires.

According to the call receiving method provide in this embodiment of this application, when the terminal device in the SA mode receives the call message from the network in the NR domain, if a 5G network fails, the terminal device cannot receive the expected information from the network within the first time period after the preset call procedure, so that the terminal device falls back to the LTE domain after the first time period to receive the call. Because the terminal device generally waits for an indication from the network side whether to fall back to the LTE domain, when the 5G network fails, the 5G network cannot indicate the terminal device to fall back to the LTE domain. Therefore, according to the call receiving method provided in this embodiment of this application, a success rate of being called of the terminal device in the SA mode can be improved by actively falling back to the LTE domain to attempt to receive the call in the LTE domain.

Optionally, as shown in FIG. 11, the call receiving method may further include:
S503: If the terminal device does not receive the call in the LTE domain within a second time period after the terminal device falls back to the LTE domain, the terminal device returns to the NR domain after the second time period.

For step S503, refer to step S309. The second time period refers to a time period from when the timer T2 starts to when the timer T2 expires. Alternatively, for step S503, refer to step S413. The second time period refers to a time period from when the timer T4 starts to when the timer T4 expires.

In a possible implementation, within the second time period after the terminal device falls back to the LTE domain, if the terminal device does not receive, in the LTE domain after sending a 183 session progress (183 session progress) message in the LTE domain, indication information indicating the terminal device to establish a dedicated bearer for voice in the LTE domain and does not receive the call, the terminal device returns to the NR domain after the second time period.

In a possible implementation, the terminal device may receive the redialed call in the LTE domain within a third time period after the second time period, and return to the NR domain after the third time period. A length of the third time period is determined by a quantity of times the terminal device does not receive the expected information in the NR domain. The greater the quantity of times, the longer the length of the third time period, and the smaller the quantity of times, the shorter the length of the third time period. For this implementation, refer to step S413. The third time period refers to a time period from when the timer T8 starts to when the timer T8 expires.

This step allows the terminal device to stay in the LTE domain for a time period so as not to miss a call redialed by the opposite end. When the call cannot be received in the LTE domain after a time period, the terminal device may return to the NR domain to receive the call again.

S504: The terminal device counts a success rate of falling back to the LTE domain, and determines, based on the success rate, whether to fall back to the LTE domain within a specific time period.

For the success rate of falling back to the LTE domain, refer to step S310, and details are not described herein again.

If the success rate is greater than or equal to the success rate threshold, in the next call, the terminal device may perform step S502 when the condition of step S502 is met. In other words, if the terminal device does not receive the expected information within the first time period after the preset call procedure, the terminal device falls back to the LTE domain after the first time period to receive the call. For this implementation, refer to step S310 or S414.

If the success rate is less than the success rate threshold, the terminal device does not actively fall back to the LTE domain within the specific time period (that is, exits the active fallback mode). In other words, if the success rate is less than the success rate threshold, even if the terminal device does not receive the expected information within the first time period after the preset call procedure, the terminal device does not actively fall back to the LTE domain after the first time period. For this implementation, refer to step S310 or S414. The reason why the success rate is less than the success rate threshold may be caused by poor signals in the LTE domain. In this case, preventing the terminal device from actively falling back to the LTE domain within the specific time period can prevent the terminal device from being repeatedly redirected between the LTE domain and the NR domain.

However, when the terminal device does not actively fall back to the LTE domain within the specific time period, the terminal device can still actively fall back to the LTE domain to receive the call if a specific condition is met. For example, when the terminal device does not fall back to the LTE domain within the specific time period, if the terminal device receives a paging message (for example, a mobile terminal paging (MT paging) message), the terminal device does not receive IMS data such as the INVITE message from the network or an electric leakage reminder text message within a fourth time period after receiving the paging message, and the terminal device receives the electric leakage reminder text message within a fifth time period after receiving the paging message, the terminal device falls back to the LTE domain to receive the call, where the fourth time period and the fifth time period do not overlap. For this implementation, refer to step S311. The fourth time period refers to a time period from when the timer T5 starts to when the timer T5 expires. The fifth time period refers to a time period from when the timer T5 expires to when the timer T7 expires. Optionally, the fifth time period refers to a time period from when the timer T6 expires to when the timer T7 expires. The terminal device can determine a missed call by analyzing the electric leakage reminder text message (a text message including an electric leakage reminder keyword), and thus actively fall back to the LTE domain to receive the redialed call.

It may be understood that, in each of the above embodiments, the methods and operations implemented by the terminal device in the foregoing embodiment may also be implemented by a component (for example, a chip or a circuit) that can be used in the terminal device.

An embodiment of this application further provides a communication apparatus. The communication apparatus may be the terminal device in the foregoing method embodiment, or an apparatus including the foregoing terminal device, or a chip or a functional module in the terminal device. Therefore, the above various methods are realized.

To implement the foregoing functions, the communication apparatus includes a hardware structure and/or a software module for performing a corresponding function. A person skilled in the art should be easily aware that the network element and algorithm steps in the examples described with reference to embodiments disclosed in this specification can be implemented in a form of hardware or a combination of hardware and computer software in this application. Whether functions are executed in hardware or computer software driving hardware depends on specific applications and design constraints of the technical solutions. A person skilled in the art may use different methods to implement the described functions for each specific application, but it should not be considered that the implementation goes beyond the scope of this application.

In embodiments of this application, the communication apparatus may be divided into functional modules based on the foregoing method embodiments. For example, division into the functional modules may be based on corresponding functions, or two or more functions may be integrated into one processing module. The integrated module may be implemented in a form of hardware or a software functional module. It should be noted that division into the modules in embodiments of this application is an example, and is merely logical function division. In actual implementation, there may be another division manner.

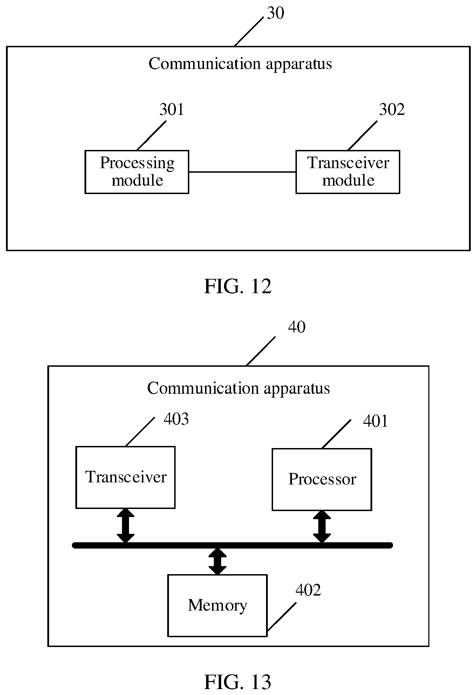

FIG. 12 is a schematic diagram of a structure of a communication apparatus 30. The communication apparatus 30 includes a processing module 301 and a transceiver module 302. The communication apparatus 30 may be the terminal device described above. The processing module 301 may also be referred to as a processing unit, which is configured to implement the processing function of the terminal device in the above method embodiment. For example, steps S309, S310, and S311 in FIG. 7A and FIG. 7B, steps S410, S413, and S414 in FIG. 9A and FIG. 9B, step S502 in FIG. 10, and steps S502, S503, and S504 in FIG. 11 are performed. The transceiver module 302, which may also be referred to as a transceiver unit, is used to realize the transceiver function of the terminal device in the foregoing method embodiment. For example, steps S303 to S311 in FIG. 7A and FIG. 7B, steps S403 to S414 in FIG. 9A and FIG. 9B, steps S501 and S502 in FIG. 10, and steps S501 to S504 in FIG. 11 are performed. The transceiver module 302 may be referred to as a transceiver circuit, a transceiver machine, a transceiver, or a communication interface.

For example, the communication apparatus 30 is the terminal device in the foregoing method embodiments.

In a possible implementation, the transceiver module 302 is configured to receive a call message from a network in an NR domain, where the call message is for requesting to call the communication apparatus. If the transceiver module 302 does not receive expected information from the network within a first time period after a preset call procedure, the processing module 301 falls back to an LTE domain after the first time period to receive a call.

In a possible implementation, the preset call procedure is an RRC reconfiguration procedure between the communication apparatus and a 5G access network device, and the RRC reconfiguration procedure is triggered by a service request procedure between the communication apparatus and a 5G core network.

In a possible implementation, the preset call procedure is for the communication apparatus to send a 183 session progress message to a service concentration and continuity application server through a 5G access network device and a 5G core network, the expected information is bearer indication information or fallback indication information, the bearer indication information indicates the communication apparatus to establish or modify a dedicated bearer for voice in the NR domain, and the fallback indication information indicates the communication apparatus to fall back to the LTE domain.

In a possible implementation, the processing module 301 is further configured to return, if the transceiver module 302 does not receive the call in the LTE domain within a second time period after the communication apparatus falls back to the LTE domain, to the NR domain after the second time period.

In a possible implementation, the transceiver module 302 receives the redialed call in the LTE domain within a third time period after the second time period; and the processing module 301 returns to the NR domain after the third time period.

In a possible implementation, a length of the third time period is determined by a quantity of times the transceiver module 302 does not receive the expected information.

In a possible implementation, the processing module 301 returns to the NR domain after the second time period if the transceiver module 302 does not receive, in the LTE domain, indication information indicating the communication apparatus to establish a dedicated bearer for voice in the LTE domain and does not receive the call after sending a 183 session progress message within the second time period after the processing module 301 falls back to the LTE domain.

In a possible implementation, the processing module 301 is further configured to count a success rate of falling back to the LTE domain, where the success rate is a ratio of a quantity of times the communication apparatus successfully falls back to the LTE domain to a total quantity of times the communication apparatus falls back to the LTE domain, and that the communication apparatus successfully falls back to the LTE domain indicates that the communication apparatus receives the call within the second time period after falling back to the LTE domain; and the processing module 301 is further configured to determine, based on the success rate, whether to fall back to the LTE domain within a specific time period.

In a possible implementation, the processing module 301 skips falling back to the LTE domain within a specific time period if the success rate is less than a success rate threshold.

In a possible implementation, when the processing module 301 does not fall back to the LTE domain within the specific time period, if the transceiver module 302 receives a paging message, does not receive the INVITE message from the network or an electric leakage reminder text message within a fourth time period after receiving the paging message, and receives the electric leakage reminder text message within a fifth time period after receiving the paging message, the processing module 301 falls back to the LTE domain to receive the call, where the fourth time period and the fifth time period do not overlap.

As shown in FIG. 13, an embodiment of this application further provides a communication apparatus. The communication apparatus 40 includes a processor 401, a memory 402, and a transceiver 403. The processor 401 is coupled to the memory 402 and the transceiver 403. The transceiver 403 is configured to support the communication apparatus to communicate with another communication apparatus. When the processor 401 executes a computer program or instructions in the memory 402, the method corresponding to the terminal device in FIG. 7A and FIG. 7B, FIG. 9A and FIG. 9B, FIG. 10, and FIG. 11 is performed.

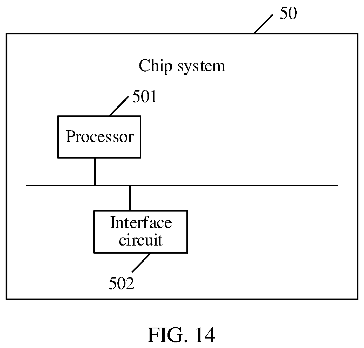

As shown in FIG. 14, an embodiment of this application further provides a chip system. The chip system 50 includes at least one processor 501 and at least one interface circuit 502. The at least one processor 501 and the at least one interface circuit 502 may be interconnected through a line. The processor 501 is configured to support the communication apparatus in implementing various functions or steps performed by the terminal device in the method embodiment described above. The at least one interface circuit 502 may be configured to receive a signal from another apparatus (for example, a memory), or send a signal to another communication apparatus (for example, a communication interface). The chip system may include a chip, and may further include another discrete device.

An embodiment of this application further provides a computer-readable storage medium, including instructions. The instructions, when run on the communication apparatus, causes the terminal device to perform various functions or steps performed by the communication apparatus in the foregoing method embodiments, for example, perform the methods shown in FIG. 7A and FIG. 7B, FIG. 9A and FIG. 9B, FIG. 10, and FIG. 11.

An embodiment of this application further provides a computer program product including instructions. The instructions, when run on a communication apparatus, cause the communication apparatus to perform various functions or steps performed by the terminal device in the foregoing method embodiments, for example, perform the methods shown in FIG. 7A and FIG. 7B, FIG. 9A and FIG. 9B, FIG. 10, and FIG. 11.

For technical effects of the communication apparatus, the chip system, the computer-readable storage medium, and the computer program product, refer to the technical effects of the foregoing method embodiment.

The processor in the embodiment of this application may be a chip. For example, the processor may be a field programmable gate array (field programmable gate array, FPGA), may be an application specific integrated circuit (application specific integrated circuit, ASIC), or may be a system on chip (system on chip, SoC), or may be a central processor unit (central processor unit, CPU), or may be a network processor (network processor, NP), or may be a digital signal processor (digital signal processor, DSP), or may be a micro controller unit (micro controller unit, MCU), or may be a programmable logic device (programmable logic device, PLD) or another integrated chip.

The memory in the embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the systems and methods described in this specification are intended to include but are not limited to these and any other suitable types of memories.

It should be understood that in various embodiments of this application, sequence numbers of the foregoing processes do not mean a sequence of execution. The execution sequence of the processes should be determined based on functions and internal logic of the processes, and should not constitute any limitation on an implementation process of embodiments of this application.

A person of ordinary skill in the art may be aware that the example modules and algorithm steps described with reference to embodiments disclosed in this specification can be implemented by using electronic hardware or a combination of computer software and electronic hardware. Whether a function is performed by hardware or by software depends on particular applications and design constraints of the technical solutions. A person skilled in the art may use different methods to implement the described functions for each specific application, but it should not be considered that the implementation goes beyond the scope of the appended claims.

A person skilled in the art may clearly understand that, for simple and clear description, for specific work processes of the foregoing described system, apparatus, and module, refer to corresponding process in the foregoing method embodiments, and details are not described herein again.

In the several embodiments provided in this application, it should be understood that the disclosed system, device and method may be implemented in other manners. For example, the described device embodiment is merely an example. For example, division of the modules is merely logical function division and there may be other division manners during actual implementation. For example, a plurality of modules or components may be combined or integrated into another device, or some features may be ignored or not performed. In addition, the displayed or discussed mutual couplings or direct couplings or communication connections may be implemented by using some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. Some or all of the modules may be selected according to actual needs to achieve the objectives of the solutions of the embodiments.

In addition, functional modules in embodiments of this application may be integrated into one device, or each of the modules may exist alone physically, or two or more modules may be integrated into one device.

All or some of the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, all or some of the processes or functions according to embodiments of this application are produced. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Disk, SSD)), or the like.

The foregoing descriptions are merely specific implementations of this application, but are not intended to limit the protection scope of this application. Any variation or replacement readily figured out by a person skilled in and familiar with the technical field within the technical scope disclosed in this application shall fall within the protection scope of this application. Therefore, the protection scope of this application shall be subject to the protection scope of the claims.

## Claims

1. A call receiving method, comprising:
receiving (S101-S103, S201-S203), by a terminal device (101, 102, 200), a call message in a new radio, NR, domain, wherein the call message is for requesting to call the terminal device (101, 102, 200), and the terminal device (101, 102, 200) is in a stand alone mode;
sending (S109, S209), by the terminal device (101, 102, 200), a first 183 session progress message in the NR domain after receiving the call message;
starting (S308), by the terminal device (101, 102, 200) after sending the first 183 session progress message, a first timer;
falling back (S111), by the terminal device (101, 102, 200), to a long term evolution, LTE, domain after a first time period, wherein the terminal device (101, 102, 200) neither receives bearer indication information nor fallback indication information within the first time period after sending the first 183 session progress message, wherein the bearer indication information indicates the terminal device (101, 102, 200) to establish or modify a dedicated bearer for voice in the NR domain, and the fallback indication information indicates the terminal device (101, 102, 200) to fall back to the LTE domain, wherein the first time period refers to a time period from when the first timer starts to when the first timer expires;
sending (S411), by the terminal device (101, 102, 200), a second 183 session progress message in the LTE domain, wherein the second 183 session progress message is a retransmission of the first 183 session progress message.

2. The method according to claim 1, further comprising:
establishing or modifying (S410), by the terminal device (101, 102, 200), a dedicated bearer for voice in the LTE domain after sending the second 183 session progress message; and
returning (S309), by the terminal device (101, 102, 200), to the NR domain after a call is hung up, wherein the terminal device (101, 102, 200) receives the call in the LTE domain after falling back to the LTE domain and before the second timer expires.

3. The method according to claim 1, further comprising:
returning, by the terminal device, to the NR domain after a second timer expires, wherein the terminal device does not receive a call in the LTE domain after falling back to the LTE domain and before the second timer expires.

4. The method according to claim 3, wherein the returning, by the terminal device (101, 102, 200), to the NR domain after the second timer expires comprises:
receiving, by the terminal device (101, 102, 200), a redialed call in the LTE domain within a third time period after the second timer expires; and
returning, by the terminal device (101, 102, 200), to the NR domain after the third time period.

5. The method according to claim 4, wherein a length of the third time period is determined by a quantity of times the terminal device (101, 102, 200) does not receive expected information.

6. The method according to claim 4, wherein the returning, by the terminal device (101, 102, 200), to the NR domain after the second timer expires, wherein the terminal device (101, 102, 200) does not receive a call in the LTE domain after falling back to the LTE domain and before the second timer expires, comprises:
returning, by the terminal device (101, 102, 200), to the NR domain after the second timer expires, wherein the terminal device (101, 102, 200) does not receive, in the LTE domain, indication information indicating the terminal device (101, 102, 200) to establish a dedicated bearer for voice in the LTE domain and does not receive a call after sending the second 183 session progress message and before the second timer expires.

7. The method according to any one of claims 4 to 6, further comprising:
counting (S310), by the terminal device (101, 102, 200), a success rate of falling back to the LTE domain, wherein the success rate is a ratio of a quantity of times the terminal device (101, 102, 200) successfully falls back to the LTE domain to a total quantity of times the terminal device (101, 102, 200) falls back to the LTE domain, and that the terminal device (101, 102, 200) successfully falls back to the LTE domain indicates that the terminal device (101, 102, 200) receives the call after falling back to the LTE domain and before the second timer expires; and
determining, by the terminal device (101, 102, 200) based on the success rate, whether to fall back to the LTE domain within a specific time period.

8. The method according to claim 7, wherein the determining, by the terminal device (101, 102, 200) based on the success rate, whether to fall back to the LTE domain within a specific time period comprises:
skipping, by the terminal device (101, 102, 200), falling back to the LTE domain within a specific time period if the success rate is less than a success rate threshold.

9. The method according to claim 8, further comprising:
when the terminal device (101, 102, 200) does not fall back to the LTE domain within the specific time period, if the terminal device (101, 102, 200) receives a paging message, the terminal device (101, 102, 200) does not receive an INVITE message from the network (105) or an electric leakage reminder text message within a fourth time period after receiving the paging message, and the terminal device (101, 102, 200) receives the electric leakage reminder text message within a fifth time period after receiving the paging message, falling back, by the terminal device (101, 102, 200), to the LTE domain to receive the call, wherein the fourth time period and the fifth time period do not overlap.

10. The method according to claim 1, wherein the duration of the first timer is less than a total 183 session progress retransmission time.

11. The method according to any one of claims 1 to 10, wherein the call message is the invitation (INVITE) message.

12. The method according to claim 1, wherein the duration of the first timer is 4 second.

13. The method according to any one of claims 1 to 12, further comprising:
sending (S408), by the terminal device, a 100 Trying message in the NR domain before sending the first 183 session progress message in the NR domain.

14. A communication apparatus (30, 40), comprising a processor (210, 401, 501) and a transceiver (403), wherein the transceiver (403) is configured to communicate with another communication apparatus (30, 40), and when the processor executes instructions, the method according to any one of claims 1 to 13 is performed.

15. A chip system (50), comprising at least one processor (210, 401, 501), the at least one processor (210, 401, 501) being configured to support a terminal device (101, 102, 200) to implement the method according to any one of claims 1 to 13.

## Patentansprüche

1. Verfahren zum Empfangen eines Anrufs, umfassend:
Empfangen (S101-S103, S201-S203) einer Anrufnachricht in einer New Radio (NR)-Domäne durch ein Endgerät (101, 102, 200), wobei die Anrufnachricht dazu dient, einen Anruf an das Endgerät (101, 102, 200) anzufordern, und wobei sich das Endgerät (101, 102, 200) in einem Stand-Alone-Modus befindet;
Senden (S109, S209) einer ersten 183 Session Progress-Nachricht in der NR-Domäne durch das Endgerät (101, 102, 200) nach Empfang der Anrufnachricht;
Starten (S308) eines ersten Zeitgebers durch das Endgerät (101, 102, 200) nach dem Senden der ersten 183 Session Progress-Nachricht;
Zurückfallen (S111) des Endgeräts (101, 102, 200) in eine Long Term Evolution (LTE)-Domäne nach einer ersten Zeitspanne, wobei das Endgerät (101, 102, 200) innerhalb der ersten Zeitspanne nach dem Senden der ersten 183 Session Progress-Nachricht weder Trägerindikationsinformationen noch Fallback-Indikatorinformationen empfängt, wobei die Trägerindikationsinformationen das Endgerät (101, 102, 200) anweisen, einen dedizierten Träger für Sprache in der NR-Domäne einzurichten oder zu modifizieren, und die Fallback-Indikatorinformationen das Endgerät (101, 102, 200) anweisen, in die LTE-Domäne zurückzufallen, wobei sich die erste Zeitspanne auf einen Zeitraum vom Starten des ersten Zeitgebers bis zum Ablauf des ersten Zeitgebers bezieht;
Senden (S411) einer zweiten 183 Session Progress-Nachricht in der LTE-Domäne durch das Endgerät (101, 102, 200), wobei die zweite 183 Session Progress-Nachricht eine Neuübertragung der ersten 183 Session Progress-Nachricht ist.

2. Verfahren nach Anspruch 1, ferner umfassend:
Einrichten oder Modifizieren (S410) eines dedizierten Trägers für Sprache in der LTE-Domäne durch das Endgerät (101, 102, 200) nach dem Senden der zweiten 183 Session Progress-Nachricht; und
Zurückkehren (S309) in die NR-Domäne durch das Endgerät (101, 102, 200), nachdem ein Anruf beendet wurde, wobei das Endgerät (101, 102, 200) den Anruf in der LTE-Domäne empfängt, nachdem es in die LTE-Domäne zurückgefallen ist und bevor ein zweiter Zeitgeber abläuft.

3. Verfahren nach Anspruch 1, ferner umfassend:
Zurückkehren des Endgeräts in die NR-Domäne nach Ablauf eines zweiten Zeitgebers, wobei das Endgerät nach dem Zurückfallen in die LTE-Domäne und vor Ablauf des zweiten Zeitgebers keinen Anruf in der LTE-Domäne empfängt.

4. Verfahren nach Anspruch 3, wobei das Zurückkehren des Endgeräts (101, 102, 200) in die NR-Domäne nach Ablauf des zweiten Zeitgebers umfasst:
Empfangen eines erneut gewählten Anrufs in der LTE-Domäne durch das Endgerät (101, 102, 200) innerhalb einer dritten Zeitspanne nach Ablauf des zweiten Zeitgebers; und
Zurückkehren des Endgeräts (101, 102, 200) in die NR-Domäne nach der dritten Zeitspanne.

5. Verfahren nach Anspruch 4, wobei eine Länge der dritten Zeitspanne durch eine Anzahl von Malen bestimmt wird, in denen das Endgerät (101, 102, 200) erwartete Informationen nicht empfängt.

6. Verfahren nach Anspruch 4, wobei das Zurückkehren des Endgeräts (101, 102, 200) in die NR-Domäne nach Ablauf des zweiten Zeitgebers, wobei das Endgerät (101, 102, 200) nach dem Zurückfallen in die LTE-Domäne und vor Ablauf des zweiten Zeitgebers keinen Anruf in der LTE-Domäne empfängt, umfasst:
Zurückkehren des Endgeräts (101, 102, 200) in die NR-Domäne nach Ablauf des zweiten Zeitgebers, wobei das Endgerät (101, 102, 200) in der LTE-Domäne keine Indikationsinformationen empfängt, die das Endgerät (101, 102, 200) anweisen, einen dedizierten Träger für Sprache in der LTE-Domäne aufzubauen, und nach dem Senden der zweiten 183 Session Progress-Nachricht und vor Ablauf des zweiten Zeitgebers keinen Anruf empfängt.

7. Verfahren nach einem der Ansprüche 4 bis 6, ferner umfassend:
Zählen (S310) einer Erfolgsrate des Zurückfallens in die LTE-Domäne durch das Endgerät (101, 102, 200), wobei die Erfolgsrate ein Verhältnis zwischen der Anzahl der Male, in denen das Endgerät (101, 102, 200) erfolgreich in die LTE-Domäne zurückfällt, und der Gesamtzahl der Male, in denen das Endgerät (101, 102, 200) in die LTE-Domäne zurückfällt, ist, und wobei ein erfolgreiches Zurückfallen des Endgeräts (101, 102, 200) in die LTE-Domäne anzeigt, dass das Endgerät (101, 102, 200) den Anruf nach dem Zurückfallen in die LTE-Domäne und vor Ablauf des zweiten Zeitgebers empfängt; und
Bestimmen durch das Endgerät (101, 102, 200) auf Basis der Erfolgsrate, ob innerhalb eines bestimmten Zeitraums in die LTE-Domäne zurückgefallen werden soll.

8. Verfahren nach Anspruch 7, wobei das Bestimmen durch das Endgerät (101, 102, 200) auf Basis der Erfolgsrate, ob innerhalb eines bestimmten Zeitraums in die LTE-Domäne zurückgefallen werden soll, umfasst:
Überspringen des Zurückfallens in die LTE-Domäne innerhalb eines bestimmten Zeitraums durch das Endgerät (101, 102, 200), wenn die Erfolgsrate unter einem Erfolgsratenschwellenwert liegt.

9. Verfahren nach Anspruch 8, ferner umfassend:
wenn das Endgerät (101, 102, 200) innerhalb des spezifischen Zeitraums nicht in die LTE-Domäne zurückfällt, wenn das Endgerät (101, 102, 200) eine Paging-Nachricht empfängt, das Endgerät (101, 102, 200) innerhalb eines vierten Zeitraums nach Empfang der Paging-Nachricht keine INVITE-Nachricht vom Netzwerk (105) oder eine Kurznachricht zur Erinnerung an eine Stromleckage empfängt, und das Endgerät (101, 102, 200) die Kurznachricht zur Erinnerung an eine Stromleckage innerhalb eines fünften Zeitraums nach Empfang der Paging-Nachricht empfängt, Zurückfallen durch das Endgerät (101, 102, 200) in die LTE-Domäne, um den Anruf entgegenzunehmen, wobei der vierte Zeitraum und der fünfte Zeitraum sich nicht überschneiden.

10. Verfahren nach Anspruch 1, wobei die Dauer des ersten Zeitgebers kleiner ist als eine gesamte 183 Session Progress-Neuübertragungszeit.

11. Verfahren nach einem der Ansprüche 1 bis 10, wobei die Anrufnachricht die Einladungsnachricht (INVITE) ist.

12. Verfahren nach Anspruch 1, wobei die Dauer des ersten Zeitgebers 4 Sekunden beträgt.

13. Verfahren nach einem der Ansprüche 1 bis 12, des Weiteren umfassend:
Senden (S408) einer 100 Trying-Nachricht durch das Endgerät in der NR-Domäne vor dem Senden der ersten 183 Session Progress-Nachricht in der NR-Domäne.

14. Kommunikationsvorrichtung (30, 40), umfassend einen Prozessor (210, 401, 501) und einen Sendeempfänger (403), wobei der Sendeempfänger (403) dazu konfiguriert ist, mit einer anderen Kommunikationsvorrichtung (30, 40) zu kommunizieren, und wobei, wenn der Prozessor Anweisungen ausführt, das Verfahren nach einem der Ansprüche 1 bis 13 durchgeführt wird.

15. Chip-System (50), umfassend mindestens einen Prozessor (210, 401, 501), wobei der mindestens eine Prozessor (210, 401, 501) dazu konfiguriert ist, ein Endgerät (101, 102, 200) bei der Implementierung des Verfahrens nach einem der Ansprüche 1 bis 13 zu unterstützen.

## Revendications

1. Procédé de réception d'appel, comprenant :
la réception (S101-S103, S201-S203), par un terminal (101, 102, 200), d'un message d'appel dans un domaine de nouvelle radio, NR, dans lequel le message d'appel sert à demander l'appel du terminal (101, 102, 200), et le terminal (101, 102, 200) est dans un mode autonome ;
l'envoi (S109, S209), par le terminal (101, 102, 200), d'un premier message de progression de session 183 dans le domaine NR après la réception du message d'appel ;
le démarrage (S308), par le terminal (101, 102, 200) après l'envoi du premier message de progression de session 183, d'un premier temporisateur ;
le repli (S111), par le terminal (101, 102, 200), vers un domaine d'évolution à long terme, LTE, après une première période temporelle, dans lequel le terminal (101, 102, 200) ne reçoit ni informations d'indication de support ni informations d'indication de repli au cours de la première période temporelle après l'envoi du premier message de progression de session 183, dans lequel les informations d'indication de support indiquent au terminal (101, 102, 200) d'établir ou de modifier un support dédié pour la voix dans le domaine NR, et les informations d'indication de repli indiquent au terminal (101, 102, 200) de se replier vers le domaine LTE, dans lequel la première période temporelle fait référence à une période de temps allant du démarrage du premier temporisateur jusqu'à l'expiration du premier temporisateur ;
l'envoi (S411), par le terminal (101, 102, 200), d'un second message de progression de session 183 dans le domaine LTE, dans lequel le second message de progression de session 183 est une retransmission du premier message de progression de session 183.

2. Procédé selon la revendication 1, comprenant en outre :
l'établissement ou la modification (S410), par le terminal (101, 102, 200), d'un support dédié pour la voix dans le domaine LTE après l'envoi du second message de progression de session 183 ; et
le retour (S309), par le terminal (101, 102, 200), vers le domaine NR après qu'un appel est raccroché, dans lequel le terminal (101, 102, 200) reçoit l'appel dans le domaine LTE après le repli vers le domaine LTE et avant l'expiration du second temporisateur.

3. Procédé selon la revendication 1, comprenant en outre :
le retour, par le terminal, vers le domaine NR après l'expiration d'un second temporisateur, dans lequel le terminal ne reçoit pas d'appel dans le domaine LTE après le repli vers le domaine LTE et avant l'expiration du second temporisateur.

4. Procédé selon la revendication 3, dans lequel le retour, par le terminal (101, 102, 200), vers le domaine NR après l'expiration du second temporisateur comprend :
la réception, par le terminal (101, 102, 200), d'un appel recomposé dans le domaine LTE au cours d'une troisième période temporelle après l'expiration du second temporisateur ; et
le retour, par le terminal (101, 102, 200), vers le domaine NR après la troisième période temporelle.

5. Procédé selon la revendication 4, dans lequel une durée de la troisième période temporelle est déterminée par un nombre de fois où le terminal (101, 102, 200) ne reçoit pas les informations attendues.

6. Procédé selon la revendication 4, dans lequel le retour, par le terminal (101, 102, 200), vers le domaine NR après l'expiration du second temporisateur, dans lequel le terminal (101, 102, 200) ne reçoit pas d'appel dans le domaine LTE après être revenu dans le domaine LTE et avant l'expiration du second temporisateur, comprend :
le retour, par le terminal (101, 102, 200), vers le domaine NR après l'expiration du second temporisateur, dans lequel le terminal (101, 102, 200) ne reçoit pas, dans le domaine LTE, d'informations d'indication indiquant au terminal (101, 102, 200) d'établir un support dédié pour la voix dans le domaine LTE et ne reçoit pas d'appel après l'envoi du second message de progression de session 183 et avant l'expiration du second temporisateur.

7. Procédé selon l'une quelconque des revendications 4 à 6, comprenant en outre :
le comptage (S310), par le terminal (101, 102, 200), d'un taux de réussite du retour vers le domaine LTE, dans lequel le taux de réussite est un rapport entre un nombre de fois où le terminal (101, 102, 200) revient avec succès vers le domaine LTE et un nombre total de fois où le terminal (101, 102, 200) revient vers le domaine LTE, et le fait que le terminal (101, 102, 200) revienne avec succès vers le domaine LTE indique que le terminal (101, 102, 200) reçoit l'appel après être revenu vers le domaine LTE et avant l'expiration du second temporisateur ; et
la détermination, par le terminal (101, 102, 200) sur la base du taux de réussite, s'il faut revenir vers le domaine LTE dans une période de temps spécifique.

8. Procédé selon la revendication 7, dans lequel la détermination, par le terminal (101, 102, 200) sur la base du taux de réussite, s'il faut revenir vers le domaine LTE dans une période de temps spécifique comprend :
l'omission, par le terminal (101, 102, 200), du retour vers le domaine LTE dans une période de temps spécifique si le taux de réussite est inférieur à un seuil de taux de réussite.

9. Procédé selon la revendication 8, comprenant en outre :
lorsque le terminal (101, 102, 200) ne revient pas au domaine LTE dans la période de temps spécifique, si le terminal (101, 102, 200) reçoit un message de radiomessagerie, le terminal (101, 102, 200) ne reçoit pas de message INVITE du réseau (105) ou un message texte de rappel de fuite électrique dans une quatrième période de temps après avoir reçu le message de radiomessagerie, et le terminal (101, 102, 200) reçoit le message texte de rappel de fuite électrique dans une cinquième période de temps après avoir reçu le message de radiomessagerie, le repli, par le terminal (101, 102, 200), vers le domaine LTE pour recevoir l'appel, dans lequel la quatrième période de temps et la cinquième période de temps ne se chevauchent pas.

10. Procédé selon la revendication 1, dans lequel la durée du premier temporisateur est inférieure à un temps total de retransmission de progression de session 183.

11. Procédé selon l'une quelconque des revendications 1 à 10, dans lequel le message d'appel est le message d'invitation (INVITE).

12. Procédé selon la revendication 1, dans lequel la durée du premier temporisateur est de 4 secondes.

13. Procédé selon l'une quelconque des revendications 1 à 12, comprenant en outre :
l'envoi (S408), par le terminal, d'un message 100 Trying dans le domaine NR avant l'envoi du premier message de progression de session 183 dans le domaine NR.

14. Appareil de communication (30, 40), comprenant un processeur (210, 401, 501) et un émetteur-récepteur (403), dans lequel l'émetteur-récepteur (403) est configuré pour communiquer avec un autre appareil de communication (30, 40), et lorsque le processeur exécute des instructions, le procédé selon l'une quelconque des revendications 1 à 13 est mis en œuvre.

15. Système de puce (50), comprenant au moins un processeur (210, 401, 501), ledit au moins un processeur (210, 401, 501) étant configuré pour supporter un dispositif terminal (101, 102, 200) afin de mettre en œuvre le procédé selon l'une quelconque des revendications 1 à 13.
